(19) Europäisches Patentamt / European Patent Office / Office européen des brevets

(11) **EP 3 657 581 B1**

(12) **EUROPEAN PATENT SPECIFICATION**

(45) Date of publication and mention of the grant of the patent:
**31.12.2025 Bulletin 2026/01**

(51) International Patent Classification (IPC):
**H01M 4/505** (2010.01)  **C01G 53/00** (2025.01)
**C01G 45/12** (2025.01)

(21) Application number: **19208992.8**

(22) Date of filing: **13.11.2019**

(52) Cooperative Patent Classification (CPC):
**C01G 53/50; C01G 45/1228; C01G 45/1242; C01G 45/1257; C01G 45/1292; C01G 53/00; C01G 53/42; C01G 53/82; H01M 4/0471; H01M 4/1391; H01M 4/366; H01M 4/505; H01M 4/525;** C01P 2002/54; C01P 2002/85;

(Cont.)

(54) **POSITIVE ACTIVE MATERIAL FOR RECHARGEABLE LITHIUM BATTERY, METHOD OF PREPARING THE SAME AND RECHARGEABLE LITHIUM BATTERY INCLUDING THE SAME**

POSITIVES AKTIVMATERIAL FÜR WIEDERAUFLADBARE LITHIUMBATTERIE, VERFAHREN ZUR HERSTELLUNG DAVON UND WIEDERAUFLADBARE LITHIUMBATTERIE DAMIT

MATÉRIAU ACTIF POSITIF POUR BATTERIE AU LITHIUM RECHARGEABLE, SON PROCÉDÉ DE PRÉPARATION ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2018 KR 20180140150**

(43) Date of publication of application:
**27.05.2020 Bulletin 2020/22**

(73) Proprietor: **Samsung SDI Co., Ltd.**
**Gyeonggi-do 17084 (KR)**

(72) Inventors:
• **KIM, Jongmin**
 **17084 Gyeonggi-do (KR)**
• **KIL, Donghyun**
 **17084 Gyeonggi-do (KR)**
• **YANG, Wooyoung**
 **17084 Gyeonggi-do (KR)**
• **LEE, Seung Joon**
 **17084 Gyeonggi-do (KR)**

(74) Representative: **Marks & Clerk LLP**
**15 Fetter Lane**
**London EC4A 1BW (GB)**

(56) References cited:
EP-A1- 2 744 021    EP-A1- 3 272 710
US-A1- 2012 282 522    US-A1- 2017 338 488
US-A1- 2018 212 237

(52) Cooperative Patent Classification (CPC): (Cont.)
C01P 2004/03; C01P 2004/04; C01P 2004/20;
C01P 2004/50; C01P 2004/51; C01P 2004/61;
C01P 2006/12; C01P 2006/40; C01P 2006/80;
H01M 10/0525; H01M 2004/028; Y02E 60/10

**Description**

**BACKGROUND OF THE INVENTION**

**(a) Field of the Invention**

A positive active material for a rechargeable lithium battery, a method of preparing the same, and a rechargeable lithium battery including the same are disclosed.

**(b) Description of the Related Art**

As portable electronic devices, communication devices, and the like are developed, there are needs for development of a rechargeable lithium battery having a high energy density.

This rechargeable lithium battery includes a positive electrode and a negative electrode which include an electrode active material layer including an electrode active material formed on an electrode current collector. The positive active material is mostly an intercalation material of lithium ions, and may be oxides such as lithium cobalt oxide ($Li_xCoO_2$), lithium nickel oxide ($Li_xNiO_2$), lithium nickel cobalt oxide ($Li_x(NiCo)O_2$), lithium nickel cobalt manganese oxide ($Li_x(NiCoMn)O_2$), spinel-type lithium manganese oxide ($Li_xMn_2O_4$), manganese dioxide ($MnO_2$), or olivine-type or NASICON-type phosphates such as lithium iron phosphate ($Li_xFePO_4$), lithium manganese phosphate ($Li_xMnPO_4$), and the like, silicates, a polymer material, and the like.

The negative electrode active material may be a compound capable of intercalating lithium metal, its alloy or lithium ion, and may be a polymer material or a carbon material, for example a graphite-based material such as artificial or natural graphite, and the like, non-graphitizable carbon, or graphitizable carbon, carbon nanotube (CNT), a carbon nanofiber (CNF), a carbon nanowall (CNW).

EP 3272710 A1 relates to a nickel-based active material for a lithium secondary battery and a method of preparing a secondary battery.

US 2017/338488 A1 relates to a lithium metal composite oxide including a primary particle having a hexagonal crystal structure and a primary particle having a cubic crystal structure.

US 2018/212237 A1 relates to a positive electrode active material for a secondary battery and a secondary battery including the positive electrode active material, a core, a shell and a buffer layer.

EP 2744021 A1 relates to a positive active material for a rechargeable lithium battery comprising a manganese oxide-based solid solution.

US 2012/282522 A1 relates to a lithium metal oxide positive electrode material produced using spray pyrolysis.

**SUMMARY OF THE INVENTION**

The present invention provides a positive active material for a rechargeable lithium battery having improved charge and discharge capacity, efficiency, and cycle-life characteristics by improving a lithium diffusion degree during charge and discharge, mitigating a stress due to volume changes, and reducing unreacted residual lithium.

Another aspect provides a method of preparing the positive active material for a rechargeable lithium battery.

Another aspect provides a rechargeable lithium battery including the positive active material for a rechargeable lithium battery.

The invention provides a positive active material for a rechargeable lithium battery including a lithium nickel-based composite oxide including a secondary particle in which a plurality of plate-shaped primary particles are agglomerated; and a lithium manganese composite oxide having at least two crystal structures, wherein the secondary particle has a regular array structure where (003) planes of the primary particles are oriented in a vertical direction with respect to the surface of the secondary particle, wherein the lithium manganese composite oxide is an oxide represented by Chemical Formula 1:

$$[\text{Chemical Formula 1}] \qquad x\text{LiMnO}_2 \cdot y\text{Li}_4\text{Mn}_5\text{O}_{12} \cdot z\text{LiMn}_2\text{O}_4 \cdot (1-x-y-z)\text{Li}_2\text{MnO}_3,$$

wherein ($0 \le x < 1$, $0 \le y < 1$, $0 \le z < 1$, $0 < y+z < 1$ and $0 < x+y+z < 1$), and the lithium nickel-based composite oxide is a compound represented by Chemical Formula 2:

$$[\text{Chemical Formula 2}] \qquad \text{Li}_a(\text{Ni}_{1-x-y-z}\text{Co}_x\text{Mn}_y\text{M}_z)\text{O}_2,$$

wherein ($0.95 \le a \le 1.3$, $x \le (1-x-y-z)$, $y \le (1-x-y-z)$, $0 < x < 1$, $0 < y < 1$, and $0 \le z < 1$), and M is at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al).

The lithium manganese composite oxide may be present on the surface of the lithium nickel-based composite oxide.

The lithium manganese composite oxide may include a cubic crystal structure and a monoclinic crystal structure, and optionally an orthorhombic crystal structure.

The lithium manganese composite oxide having the cubic crystal structure may be at least one of $LiMn_2O_4$ and $Li_4Mn_5O_{12}$, the lithium manganese composite oxide having the monoclinic crystal structure may be $Li_2MnO_3$, and the lithium manganese composite oxide having the orthorhombic crystal structure may be $LiMnO_2$.

The lithium manganese composite oxide may be included in an amount of about 0.1 wt% to about 5 wt% based on a total weight of the positive active material.

The lithium manganese composite oxide may have an average particle diameter of less than or equal to about 10 μm.

The positive active material may include unreacted residual lithium of less than or equal to about 1,300 ppm or less than or equal to about 1,000 ppm on the surface thereof.

The lithium nickel-based composite oxide may have a porosity of about 1 % to about 8 %.

The lithium nickel-based composite oxide may have a specific surface area of about 0.3 $m^2$/g to about 0.8 $m^2$/g.

The secondary particles may have a one-centered radial arrangement having one center or a multi-centered radial array structure having a plurality of centers.

Another aspect of the invention provides a method of preparing the positive active material for a rechargeable lithium battery including mixing a metal hydroxide precursor and a lithium source to prepare a first mixture; first heat-treating the first mixture under a high temperature condition to prepare a first fired product including residual lithium; mixing the first fired product with manganese-based oxide to prepare a second mixture; and second heat-treating the second mixture to prepare a second fired product.

The second mixture may further include a lithium source.

The first heat-treating may be performed at about 750 °C to about 950 °C.

The manganese-based oxide may be mixed in an amount of about 0.1 to about 5 parts by weight based on 100 parts by weight of the first fired product.

Another embodiment provides a rechargeable lithium battery including the positive electrode including a positive active material; a negative electrode including a negative active material; and an electrolyte.

At least some of the above and other features of the invention are set out in the claims.

Other specific details of the embodiments of the present invention are included in the detailed description below.

The lithium nickel-based composite oxide including secondary particles consisting of primary particles with surface orientation has an effect of improving the capacity of the battery by facilitating movement of lithium between the surface of the active material and the electrolyte. Also, a residual lithium content generated on the surface of the positive active material particle during a preparing process of the positive active material may be reduced by including lithium manganese composite oxide in addition to the lithium nickel-based composite oxide. Accordingly, it is possible to reduce a gas generation and side reaction and obtain a rechargeable lithium battery having phase stability and improved cycle-life and capacity characteristics.

## BRIEF DESCRIPTION OF THE DRAWINGS

FIG. 1A is a schematic view of oriented primary particles of a lithium nickel-based composite oxide, as included in the positive active material according to embodiments of the present disclosure.

FIG. 1B is a schematic view of a secondary particle 20 in which a plurality of plate-shaped lithium nickel-based composite oxide primary particles 10 are agglomerated, according to embodiments of the present disclosure.

FIG. 2 is a transmission electron microscope (TEM) image of the selected area diffraction (SAD) pattern of the positive active material prepared according to Example 1.

FIG. 3 is a graph showing an energy dispersive X-ray spectroscopy (EDS) analysis of the positive active material prepared according to Example 1.

FIG. 4A is a scanning electron microscopy (SEM) image of the material according to Example 1.

FIG. 4B is a SEM image of an Example material including a slightly smaller lithium manganese composite oxide particle size compared to Example 1.

FIG. 4C is a cross-sectional SEM image of the material according to Example 1, showing the radial arrangement of primary particles at the surface of the particle.

FIG. 5 is a perspective view that schematically shows a representative structure of a rechargeable lithium battery.

FIG. 6 is a graph showing gas generation amounts at a high temperature in the coin cells manufactured according to Example 1 and Comparative Examples 1 to 5.

## DETAILED DESCRIPTION OF THE EMBODIMENTS

Hereinafter, embodiments of the present disclosure are illustrated in detail. However, the present disclosure is not limited to these embodiments and the present disclosure is defined by the scope of claims.

In an embodiment, the size (particle) and average particle diameter may be average particle diameter D50. The average particle diameter D50 represented by a particle diameter corresponds to 50% by volume of the volume of a laser diffraction particle distribution measurement method.

A positive active material for a rechargeable lithium battery according to an embodiment includes a lithium nickel-based composite oxide including a secondary particle in which a plurality of plate-shaped primary particles are agglomerated; and a lithium manganese composite oxide having at least two crystal structures, wherein the secondary particle has a regular array structure where (003) planes of the primary particles are oriented in a vertical direction with respect to the surface of the secondary particle, wherein the lithium manganese composite oxide is an oxide represented by Chemical Formula 1:

$$[\text{Chemical Formula 1}] \qquad x\text{LiMnO}_2 \cdot y\text{Li}_4\text{Mn}_5\text{O}_{12} \cdot z\text{LiMn}_2\text{O}_4 \cdot (1\text{-}x\text{-}y\text{-}z)\text{Li}_2\text{MnO}_3,$$

wherein ($0 \leq x < 1$, $0 \leq y < 1$, $0 \leq z < 1$, $0 < y+z < 1$ and $0 < x+y+z < 1$), and the lithium nickel-based composite oxide is a compound represented by Chemical Formula 2:

$$[\text{Chemical Formula 2}] \qquad \text{Li}_a(\text{Ni}_{1\text{-}x\text{-}y\text{-}z}\text{Co}_x\text{Mn}_y\text{M}_z)\text{O}_2,$$

wherein ($0.95 \leq a \leq 1.3$, $x \leq (1\text{-}x\text{-}y\text{-}z)$, $y \leq (1\text{-}x\text{-}y\text{-}z)$, $0 < x < 1$, $0 < y < 1$, and $0 \leq z < 1$), and M is at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al).

The positive active material includes a lithium manganese composite oxide to improve the structural stability. Specifically, cracking of the composite positive active material generated in the lithium nickel-based composite oxide during charging and discharging of a rechargeable lithium battery is suppressed to reduce a side reaction with an electrolyte, reduce gas generation, and improve charge and discharge characteristics. In addition, since the lithium manganese composite oxide is produced by reacting residual lithium remaining on the surface of the lithium nickel-based composite oxide and manganese-based oxide, residual lithium existing in the inside and on the surface of the lithium nickel-based composite oxide may be reduced to suppress a side reaction of the positive active material and the electrolyte.

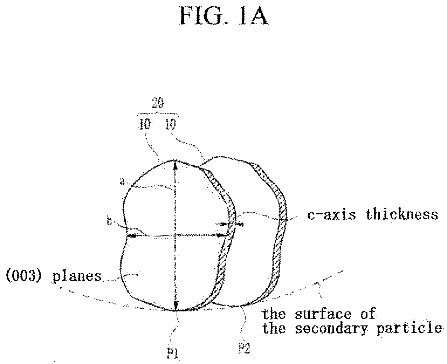

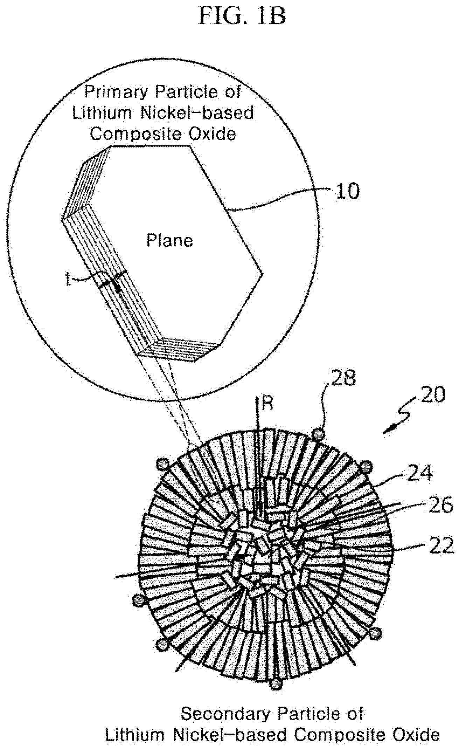

The lithium nickel-based composite oxide includes a secondary particle in which a plurality of plate-shaped primary particles are agglomerated, and the secondary particle has a regular array structure where (003) planes of the primary particles are oriented in a vertical direction with respect to the surface of the secondary particle. Hereinafter, the lithium nickel-based composite oxide is described referring to FIGS. 1A and1B.

FIG. 1A is a schematic view showing oriented primary particles constituting a lithium nickel-based composite oxide, as included in secondary particles 20 of the positive active material according to embodiments of the present disclosure. The dimensions of each primary particle 10 can be described in terms of a, b, and c axes, where the "a axis" refers to the longest dimension, the "b axis" refers to the intermediate dimension, and the "c axis" refers to the shortest dimension or thickness of the particle. In some embodiments, the a, b, and c axes additionally correspond to the crystal lattice coordinates (Miller indices) h, k, and l, such that crystal planes normal to e.g., the c axis may be denoted as (00l) and may form a planar surface of the primary particle. Referring to FIG. 1A, (003) planes of primary particles 10 are oriented in a vertical direction with respect to the surface of the secondary particle (dashed line). As used herein to describe the secondary particle, the term "surface" refers to an outermost surface of the secondary particle (as approximated, for example, as a sphere or ellipsoid enclosing the secondary particle). As used herein to refer to the positioning or orientation of the primary particles, the terms "vertical direction", "normal", and/or "perpendicular" indicate that one selected from a long axis (a axis) and a short axis (b axis) of the (003) plane crosses the surface of the secondary particle (e.g., crosses a plane tangent to the surface of the secondary particle at the point of intersection) at an angle of about 70 ° to about 110 °, or for example about 80 ° to about 100 °. When the (003) plane of the primary particles 10 is oriented so as to be perpendicular to the surface of the secondary particle 20, a relatively large number of lithium diffusion passages between boundaries are formed on a shell side (e.g., on or along the outermost surface and/or portion) of the secondary particle 20 and a lithium diffusion degree (e.g., lithium diffusion rates) may be increased by exposing a large amount (surface area) of the crystal surface capable of lithium transfer, thereby securing high initial efficiency and capacity. **In** addition, it is possible to suppress a stress caused by volume changes of the secondary particle 20 during charge and discharge to suppress the occurrence of cracks.

FIG. 1A shows only secondary particles composed of two primary particles (P1 and P2), but it is obvious that three or more primary particles may be agglomerated to form secondary particles.

As used herein, a "core" refers to a region of about 65 length % to about 85 length % from the center of a total distance from the center to the surface of the secondary particle 20. For example, in the lithium nickel-based composite oxide, it may be a remaining region except a region within about 2 $\mu$m from the outermost. In addition, a "shell" refers to a region of about 5 length % to about 15 length % from the outermost of a total distance from the center to the surface of the lithium nickel-based composite oxide or within about 2 $\mu$m of the outermost of the lithium nickel-based composite oxide. An "intermediate layer" refers to a remaining region except for the core and the shell. As used herein, the orientation of primary particles 10 may be predominantly in shells of the secondary particle 20.

The lithium manganese composite oxide may be present on the surface of the lithium nickel-based composite oxide. In some embodiments, for example, the lithium manganese composite oxide may be arranged discontinuously in a type of an island on the surface of the lithium nickel-based composite oxide. In some embodiments, the lithium manganese composite oxide may form a substantially uniform or substantially continuous coating layer on the outer surface of the lithium nickel-based composite oxide. Further, in some embodiments when the coating layer is substantially continuous, the lithium manganese composite oxide may substantially cover the entire surface of the lithium nickel-based composite oxide.

FIG. 1B is a schematic view of a secondary particle 20 in which a plurality of plate-shaped lithium nickel-based composite oxide primary particles 10 are agglomerated, according to embodiments of the present disclosure. The secondary particle 20 includes a core 22, a shell 24, and an intermediate layer 26 between the core 22 and the shell 24. As depicted by the planes within the primary particle 10 shown in the inset, as translated into the context of the secondary particle 20, (003) planes of the primary particles 10 are oriented in a vertical direction with respect to an outermost surface of the secondary particle 20 (e.g., along the direction R). In FIG. 1B, island-shaped particles of the lithium manganese composite oxide 28 are on the outermost surface of the secondary particle 20. Furthermore, FIG. 1B depicts a particle having a single-center radial arrangement structure. However, it will be understood that embodiments of the present disclosure are not limited thereto, and the lithium manganese composite oxide 28 may be present in other structures or formats, and/or the particle may have a multi-centered radial arrangement structure, as described herein.

The lithium manganese composite oxide may effectively block side reactions of lithium nickel-based composite oxide and electrolyte solution by being present on the surface of the lithium nickel-based composite oxide. Therefore, a lithium ion diffusion degree is improved and thus rate capability of the battery may be improved, and output characteristics may be improved by reducing the resistance on the surface of the positive active material.

In addition, the lithium manganese composite oxide may be included in an amount of greater than or equal to about 0.1 wt%, for example greater than or equal to about 0.2 wt%, greater than or equal to about 0.3 wt%, greater than or equal to about 0.4 wt%, or greater than or equal to about 0.5 wt% and less than or equal to about 5 wt%, for example less than or equal to about 4 wt%, less than or equal to about 3 wt%, less than or equal to about 2 wt%, or less than or equal to about 1 wt% based on a total weight of the positive active material. When the amount of the lithium manganese composite oxide is in the range, a reduction effect of the residual lithium and capacity characteristics may be improved.

The lithium manganese composite oxide may have an average particle diameter of less than or equal to about 10 $\mu$m, for example less than or equal to about 8 $\mu$m, less than or equal to about 5 $\mu$m, less than or equal to about 3 $\mu$m, or less than or equal to about 1 $\mu$m. When the average particle diameter is within the ranges, the lithium manganese composite oxide may readily be present on the surface of the lithium nickel-based composite oxide. As a result, it is possible to effectively block a side reaction of the lithium nickel-based composite oxide and electrolyte solution. Therefore, a diffusion degree of lithium ion is improved and thus rate capability of the battery may be improved, and output characteristics may be improved by reducing a resistance on the surface of the positive active material.

In embodiments of the present disclosure, when the lithium manganese composite oxide is present on the surface of the lithium nickel-based composite oxide (for example, as a plurality of island-shaped particles), at least a portion of the primary particles at the surface of the lithium nickel-based composite oxide, for example, those adjacent to the lithium nickel-based composite oxide are thereby formed or arranged as a flower-shaped surface. As used herein, the term "flower-shaped surface" may indicate that the primary particles are formed or arranged in the shape of flower petals, such as those of a chrysanthemum, so that the thicknesses of the particles are aligned with a range of directions. and are not stacked in (along) a single direction. As such, spaces (channels) are formed between the arranged primary particles. In some embodiments, when the amount of lithium manganese composite oxide is increased, the surface area on the secondary particle having a flower-shape is accordingly increased.

The lithium manganese composite oxide is represented by Chemical Formula 1.

[Chemical Formula 1] $\quad\quad x\text{LiMnO}_2 \cdot y\text{Li}_4\text{Mn}_5\text{O}_{12} \cdot z\text{LiMn}_2\text{O}_4 \cdot (1\text{-}x\text{-}y\text{-}z)\text{Li}_2\text{MnO}_3$

($0 \le x < 1$, $0 \le y < 1$, $0 \le z < 1$, $0 < y+z < 1$ and $0 < x+y+z < 1$)

In addition, the lithium manganese composite oxide has at least two types of crystal structures. For example, the lithium manganese composite oxide may include a cubic crystal structure and a monoclinic crystal structure, and optionally an orthorhombic crystal structure. Unlike a general lithium nickel-based composite oxide, which has a layered crystal structure, the lithium manganese composite oxide according to an embodiment of the present invention includes at least two types of crystal structures, for example, a cubic crystal structure and a monoclinic crystal structure, and optionally an orthorhombic crystal structure, and therefore lithium ions may move in three dimensions. Therefore, compared to the layered structure capable of two-dimensional movement of lithium ions, the movement of lithium ions is smoother, a speed thereof is faster, and intercalation and deintercalation of lithium ions may be facilitated. In addition, in a crystal formation process of lithium manganese composite oxide, it is easier to remove unreacted residual lithium present on the surface of the lithium nickel-based composite oxide effectively, to remove a sheet resistance layer, and facilitate intercalation and deintercalation of lithium.

The lithium manganese composite oxide having the cubic crystal structure may be at least one of $LiMn_2O_4$ and $Li_4Mn_5O_{12}$, the lithium manganese composite oxide having the monoclinic crystal structure may be $Li_2MnO_3$, and the lithium manganese composite oxide having the orthorhombic crystal structure may be $LiMnO_2$. When the lithium manganese composite oxide has the composition or the crystal structure, amounts of residual lithium and gas generated may be reduced and cycle-life and capacity characteristics of the rechargeable lithium battery may be improved.

On the other hand, the crystal structure of the lithium manganese composite oxide may be confirmed through transmission electron microscopy (TEM). A content of each element such as lithium on the surface thereof may be measured through X-ray photoelectron spectroscopy (XPS), transmission electron microscopy, or energy dispersive x-ray spectroscopy (EDS). In addition, the residual lithium of the lithium nickel-based composite oxide may be measured by using an inductively coupled plasma-atomic emission spectrometer (ICP-AES). The lithium nickel-based composite oxide may be a porous particle including a plurality of pores therein. A total porosity may be greater than or equal to about 1 % (e.g. about 1.0%), greater than or equal to about 1.5 %, greater than or equal to about 2.0 %, or greater than or equal to about 2.5 %, and less than or equal to about 8 % (e.g. about 8.0%), less than or equal to about 7.5 %, less than or equal to about 7.0 %, or less than or equal to about 6.5 %. The porosity is used in the same sense as a pore volume fraction, and is shown as a ratio of an area occupied by pores relative a total area. Internal pores may effectively accommodate changes in the structure of during charge and discharge.

In addition, the lithium nickel-based composite oxide may have a specific surface area of about 0.3 $m^2$/g to about 0.8 $m^2$/g. When the specific surface area is in the range, electrochemical cycle-life characteristics of the battery may be improved. On the other hand, the specific surface area may be measured in a Brunauer-Emmett-Teller (BET) method. For example, a BET 6-point method may be used according to a nitrogen gas adsorption method by using a porosimetry analyzer (Belsorp-II Mini, Bell Japan Inc.).

The primary particles 10 oriented as described above are agglomerated with each other to form the secondary particle 20. For example, the plurality of primary particles 10 may be agglomerated with each other to provide a secondary particle 20 having a radial array structure. The plurality of primary particles 10 may be oriented toward one center so as to form a face contact along the c-axis (thickness) direction of the primary particles 10, to provide the secondary particle 20 having a radial array structure. In another embodiment, the secondary particle 20 may have a multi-centered radial array structure having a plurality of centers. When the secondary particle 20 has a one-centered or multi-centered radial array structure as described above, lithium may be easily intercalated/deintercalated into the center of the secondary particle 20.

An unreacted residual lithium content present on the surface of the positive active material may be less than or equal to about 1,300 ppm, less than or equal to about 1,200 ppm, less than or equal to about 1,100 ppm, less than or equal to about 1,000 ppm, or less than or equal to about 955 ppm.

The residual lithium content is a lithium content calculated from contents of $Li_2CO_3$ and LiOH remaining on the surface of the positive active material. Generally, a large particle size of a positive active material is desirable for high capacity of a battery, but in this case, since a surface area is relatively small, there is a problem that rate capability and initial capacity may be decreased due to a reduction of the active area contacting an electrolyte solution. In order to solve this problem, the lithium nickel-based composite oxide including secondary particles in which a plurality of plate-shaped primary particles are agglomerated is used as a positive active material in an embodiment. However, as for this positive active material including secondary particles having a developed surface orientation, lithium ions react with moisture, $CO_2$, and the like in the air and thus may easily form surface impurities such as $Li_2CO_3$, LiOH, and the like, while moving on the surface of the active material, and these surface impurities may deteriorate battery capacity or may be decomposed inside a battery, and thus generate gas and cause a battery swelling phenomenon, which results in a serious problem of deteriorating high temperature stability and the like. On the contrary, the lithium manganese composite oxide is prepared by reacting the unreacted residual lithium on the surface of the secondary particles with a manganese-based oxide and thus has no aforementioned problem of the lithium nickel-based composite oxide.

The lithium nickel-based composite oxide is a compound represented by Chemical Formula 2.

[Chemical Formula 2]          $Li_a(Ni_{1-x-y-z}Co_xMn_yM_z)O_2$

$(0.95 \leq a \leq 1.3, x \leq (1-x-y-z), y \leq (1-x-y-z), 0 < x < 1, 0 \leq y < 1,$ and $0 \leq z < 1)$

In Chemical Formula 2, M is at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $0.95 \leq a \leq 1.3$, $x \leq (1-x-y-z)$, $y \leq (1-x-y-z)$, $0 < x < 1$, $0 \leq y < 1$, and $0 \leq z < 1$. For example, in Chemical Formula 2, $0 < x \leq 0.33$, $0 \leq y \leq 0.5$, $0 \leq z \leq 0.05$, $0.33 \leq (1-x-y-z) \leq 0.95$. For example, in Chemical Formula 2, $0.5 \leq (1-x-y-z) \leq 0.95$. For example, in Chemical Formula 2, $0 < z \leq 0.05$ and M is aluminium. The lithium nickel-based composite oxide represented by Chemical Formula 2 may be for example, $LiNi_{0.6}Co_{0.2}Mn_{0.2}O_2$, $LiNi_{0.5}Co_{0.2}Mn_{0.3}O_2$, $LiNi_{1/3}Co_{1/3}Mn_{1/3}O_2$, $LiNi_{0.8}Co_{0.1}Mn_{0.1}O_2$, or $LiNi_{0.85}Co_{0.1}Al_{0.05}O_2$.

Another aspect provides a method of preparing the positive active material for a rechargeable lithium battery including mixing a metal hydroxide precursor and a lithium source to prepare a first mixture; first heat-treating the first mixture under a high temperature condition to prepare a first fired product including residual lithium; mixing the first fired product with manganese-based oxide to prepare a second mixture; and second heat-treating the second mixture to prepare a second fired product (the positive active material).

First, the metal hydroxide precursor is prepared.

The metal hydroxide precursor may be prepared through each first, second, and third step process of forming a core, an intermediate layer, and a shell. In the first, second, and third steps, process conditions such as concentrations and input amounts of metal raw materials, a concentration and an input amount of ammonia water as a complex agent, an input amount of a pH controlling agent, and the like may be changed.

As used herein, a "core" in the context of the metal hydroxide precursor refers to a region of about 65 length % to about 85 length % from the center of a total distance from the center to the surface of the metal hydroxide precursor. For example, in the metal hydroxide precursor, it may be a remaining region except a region within about 2 $\mu$m from the outermost. In addition, a "shell" refers to a region of about 5 length % to about 15 length % from the outermost of a total surface from the center to the surface of the metal hydroxide precursor or within about 2 $\mu$m of the outermost of the metal hydroxide precursor. An "intermediate layer" refers to a remaining region except for the core and the shell in the metal hydroxide precursor.

The first step is a step of forming the core of the metal hydroxide precursor.

First, the complex agent and the pH controlling agent are put in a reactor, and the metal raw materials are added thereto and reacted. When pH of the reaction mixture in the reactor is changed as the reaction goes, the pH controlling agent may be further added thereto to control pH. Specifically, the complex agent may have a concentration of about 0.1 M to about 0.7 M, for example, about 0.2 M to about 0.5 M. The input amount of the complex agent may be in a range of about 6 ml/min to about 12 ml/min or about 8 ml/min to about 12 ml/min. The metal raw materials may have concentrations of about 0.1 M to about 3.5 M, for example, about 2 M. The input amounts of the metal raw materials may be in a range of about 50 ml/min to about 100 ml/min.

The second step is a step of forming the intermediate layer of the metal hydroxide precursor.

The metal raw materials and the complex agent are added to a resulting material of the first step reaction to control pH of the reaction mixture, and then, a reaction of the second step is performed. Particularly, in the second step, the input amount and the concentration of the metal raw materials and the complex agent are increased in order to prevent a growth rate decrease of particles after reacting the product from the first step for a predetermined time. Specifically, a concentration of the complex agent may be for example about 0.3 M to about 1.0 M, the input amount of the complex agent may be in a range of about 8 ml/min to about 15 ml/min, the metal raw materials may have concentrations of about 0.1 M to about 3.5 M, for example, about 2 M, and the input amounts of the metal raw materials may be in a range of about 90 ml/min to about 120 ml/min.

The third step is a step of forming the shell of the metal hydroxide precursor and finally forming the metal hydroxide precursor.

The input amounts and the concentrations of the metal raw materials and the complex agent are increased in order to prevent a growth rate decrease of particles after reacting a reaction product from the second step for a predetermined time. Specifically, the concentration of the complex agent may be in a range of about 0.35 M to about 1.0 M, the input amount of the complex agent may be in a range of about 12 ml/min to about 20 ml/min, the metal raw materials may have concentrations of about 0.1 M to about 3.5 M, for example, about 2 M, and the input amounts of the metal raw materials may be in a range of about 120 ml/min to about 150 ml/min. On the other hand, a reaction condition of the third step has a large influence on a surface depth of a porous layer of the metal hydroxide precursor.

The first to third steps share the following common conditions.

In each step, an agitation power is in a range of about 0.1 $kW/m^3$ to about 6 $kW/m^3$, for example, about 1 $kW/m^3$ to about 3 $kW/m^3$. In the second and third steps, the agitation power may be decreased compared with that of the first step, but the agitation power of the second and third steps may be the same.

The pH of the reaction mixture may be adjusted in a range of about 10 to about 12. Particularly, the pH controlling agent may control the pH of the reaction mixture to form a precipitate from the reaction mixture, for example sodium hydroxide (NaOH), sodium carbonate ($Na_2CO_3$), sodium oxalate ($Na_2C_2O_4$), and the like, and the sodium hydroxide (NaOH) may be used preferably.

The concentration of the complex agent increases sequentially from the first step toward the second step and then the third step and may be for example about 0.1 M to about 0.7 M. Particularly, a complex agent plays a role in controlling a reaction rate of formation of a precipitate in a co-precipitation reaction, and may be ammonia water and citric acid and in an embodiment, may be preferably ammonia water. On the other hand, an amount of the complex agent is used at a general level.

Meanwhile, the porosity inside the metal hydroxide precursor particles is affected by the time of applying each step described above.

Since pores between (001) crystal planes are appropriately maintained due to a minimized exposure of a (001) crystal plane, the metal hydroxide precursor may have excellent structural stability.

The metal hydroxide precursor may be represented by $Me(OH)_2$ (wherein Me includes nickel, cobalt, manganese, and M of Chemical Formula 2), for example a compound represented by Chemical Formula 3.

[Chemical Formula 3]  $\qquad$ $(Ni_{1-x-y-z}Co_xMn_yM_z)(OH)_2$

In Chemical Formula 3, M is at least one element selected from boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al), $x \leq (1-x-y-z)$, $y \leq (1-x-y-z)$, $0 < x < 1$, $0 \leq y < 1$, and $0 \leq z < 1$. For example, in Chemical Formula 3, $0 < x \leq 0.33$, $0 \leq y \leq 0.5$, $0 \leq z \leq 0.05$, and $0.33 \leq (1-x-y-z) \leq 0.95$. For example, in Chemical Formula 3, $0.5 \leq (1-x-y-z) \leq 0.95$. For example, in Chemical Formula 3, $0 < z \leq 0.05$ and M is aluminium. The metal hydroxide precursor represented by Chemical Formula 3 may be for example $Ni_{0.6}Co_{0.2}Mn_{0.2}(OH)_2$, $Ni_{0.5}Co_{0.2}Mn_{0.3}(OH)_2$, $Ni_{1/3}Co_{1/3}Mn_{1/3}(OH)_2$, $Ni_{0.8}Co_{0.1}Mn_{0.1}(OH)_2$, or $Ni_{0.85}Co_{0.1}Al_{0.05}(OH)_2$.

Hereinafter, a method of preparing the positive active material for a rechargeable lithium battery is described.

First, the metal hydroxide precursor and a lithium source are mixed to prepare a first mixture. The lithium source may be for example lithium hydroxide, lithium fluoride, lithium carbonate, or a mixture thereof.

A mixing ratio of lithium source and metal hydroxide precursor is controlled stoichiometrically to produce the lithium nickel-based composite oxide of Chemical Formula 2.

The mixing may be dry mixing, which may be performed using a mixer or the like. The dry mixing may be performed using milling. The milling is carried out so that there is almost no deformation such as micronization of the metal hydroxide precursor used as the starting material. For this purpose, it is necessary to control a size of the lithium source mixed with the metal hydroxide precursor in advance. The lithium source may have a size (average particle diameter) of about 5 μm to about 20 μm, for example about 10 μm. When the internal temperature of the mixer is increased above 30 °C during the above milling process, the internal temperature of the mixer may be cooled to maintain it at room temperature, 25 °C.

The first mixture is first heat-treated under a high temperature condition to prepare a first fired product.

The first heat-treating may be performed at a high temperature of about 750 °C to about 950 °C, for example, about 800 °C to about 900 °C. In the first heat-treating, a temperature-increasing rate may be about 1 °C/min to about 5 °C/min, for example, about 2 °C/min or about 3 °C/min. The first heat-treating time may be changed depending on the first heat-treating temperature and the like, for example, in a range of about 3 hours to about 10 hours or in a range of about 5 hours to about 7 hours.

The first heat-treating may be performed under an air atmosphere or an oxidizing gas atmosphere.

On the other hand, the oxidizing gas atmosphere indicates a gas atmosphere further including oxygen in the air. In the oxidizing gas atmosphere, the oxygen may be included in an amount of about 20 volume% to about 40 volume%.

The obtained first fired product is mixed with a manganese-based oxide to obtain a second mixture.

The manganese-based oxide may be at least one of $Mn_2O_3$ and $MnO_2$.

The first fired product may include the lithium nickel-based composite oxide and the unreacted residual lithium.

The mixing may be dry mixing or may be performed using a mixer or the like. The dry mixing may be performed using milling.

The manganese-based oxide may be mixed in an amount of about 0.1 to about 5 parts by weight, for example, about 0.3 to about 2 parts by weight, or about 0.5 to about 1.5 parts by weight based on 100 parts by weight of the first fired product. When the first fired product and the manganese-based oxide are mixed within the range, a reduction effect of the unreacted residual lithium may be improved, and capacity increase and structure stability of a rechargeable lithium battery may be secured.

The second mixture may further include a lithium source. When the metal hydroxide precursor has a low nickel content, a generation amount of residual lithium may be low, and the second mixture may be mixed with the same lithium source as the lithium source mixed with the first mixture.

The second mixture is subjected to second heat-treating to prepare a second fired product.

The second heat-treating may be performed under an air atmosphere or an oxidizing gas atmosphere as in the first heat-treating.

In addition, the second heat-treating may be for example performed at about 300 °C to about 600 °C, for example about 350 °C to about 500 °C or about 370 °C to about 450 °C. In addition, a temperature-increasing rate during the second heat-treating may be about 1 ° C/min to about 5 ° C/min, for example about 2 °C/min or 3 °C/min. A second heat-treating time is variable for a second heat-treating temperature, but may be for example about 3 hours to 10 hours or about 5 hours to about 7 hours. When the second heat-treating temperature is in the range, a reduction effect of unreacted residual lithium may be improved and the lithium manganese composite oxide may be easily formed, thereby ensuring structural stability of the positive active material.

The positive electrode and the negative electrode according to another embodiment are formed by applying each of a composition for forming a positive active material layer and a composition for forming a negative active material layer on a current collector, and drying the composition.

The composition forming the positive active material layer is formed by mixing a positive active material, a conductive agent, a binder, and a solvent, and the positive active material is as described above.

The binder is a component that assists in binding of the active material to the conductive agent and to the current collector. The binder is added in an amount of about 1 to about 50 parts by weight based on a total weight of 100 parts by weight of the positive active material. Non-limiting examples of the binder may be polyvinylidene fluoride, polyvinyl alcohol, carboxylmethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), sulfonated EPDM, a styrene butadiene rubber, a fluoro rubber, or various copolymers. An amount of the binder may be about 2 to about 5 parts by weight based on a total weight of 100 parts by weight of the positive active material. When the amount of the binder is in the above range, a binding force of the active material layer to the current collector is improved.

The conductive agent may be not particularly limited as long as it has electron conductivity without causing chemical changes in a battery and may be, for example graphite such as natural graphite or artificial graphite; a carbon-based material such as carbon black, acetylene black, ketjen black, channel black, furnace black, lamp black, thermal black and the like; a conductive fiber such as a carbon fiber or a metal fiber; carbon fluoride; a metal powder such as aluminium or a nickel powder; a conductive whisker such as zinc oxide, or potassium titanate; a conductive metal oxide such as titanium oxide; a conductive material such as a polyphenylene derivative. An amount of the conductive agent may be about 2 to about 5 parts by weight based on a total weight of 100 parts by weight of the positive active material. When the amount of the conductive agent is in the above range, conductivity of the finally obtained electrode is improved.

Non-limiting examples of the solvent include N-methylpyrrolidone and the like. An amount of the solvent is about 10 to about 100 parts by weight based on 100 parts by weight of the positive active material. When the amount of the solvent is in the range, it is easy to work to form the active material layer.

The positive current collector is about 3 $\mu$m to about 500 $\mu$m thick and is not particularly limited if it has high conductivity without causing chemical changes in the battery, and may be for example, stainless steel, aluminium, nickel, titanium, heat-treated carbon, or aluminium or stainless steel which is surface-treated with carbon, nickel, titanium, silver, and the like. The current collector may form a fine concavo-convex on its surface to enhance an adherence of positive active materials and may be in various forms such as films, sheets, foils, nets, porous bodies, foams and nonwoven fabric bodies.

Separately, a composition for forming a negative active material layer is prepared by mixing a negative active material, a binder, a conductive agent, and a solvent. The negative active material is a material capable of intercalating and releasing lithium ions. As non-limiting examples of the negative active material, a carbon-based material such as graphite or carbon, a lithium metal, an alloy thereof, and a silicon oxide-based material may be used. According to an embodiment of the present invention, silicon oxide may be used.

The binder, the conductive agent, and the solvent may be the same types of materials as the positive electrode. The binder is added in an amount of about 1 to about 50 parts by weight based on a total weight of 100 parts by weight of the negative active material. The conductive agent is added in an amount of about 1 to about 5 parts based on a total weight of 100 parts by weight of the negative active material. When the amount of the conductive agent is in the range, conductivity characteristics of the finally obtained electrode are improved. An amount of the solvent is about 10 to about 100 parts by weight based on 100 parts by weight of the negative active material. When the amount of the solvent is in the range, it is easy to work to form the negative active material layer.

The negative current collector is about 3 $\mu$m to about 500 $\mu$m thick. Such a negative current collector is not particularly limited if it has high conductivity without causing chemical changes in the battery and may be, for example, copper, stainless steel, aluminium, nickel, titanium, heat-treated carbon, copper or stainless steel which is surface-treated with carbon, nickel, titanium, silver, and the like, an aluminium-cadmium alloy, and the like. In addition, the negative current collector may form a fine concavo-convex on its surface to enhance an adherence of negative active materials and may be in various forms such as films, sheets, foils, nets, porous bodies, foams and nonwoven fabric bodies, like the positive current collector.

A separator is disposed between the positive electrode and the negative electrode according to the procedure.

The separator has a pore diameter of about 0.01 $\mu$m to about 10 $\mu$m and a thickness of about 5 $\mu$m to about 300 $\mu$m. Specific examples may include polypropylene, polyethylene and the like olefin based polymer; or a sheet made of a glass fiber or a non-woven fabric. When a solid electrolyte such as a polymer is used as the electrolyte, a solid electrolyte may also serve as a separator.

The electrolyte may be a non-aqueous electrolyte including a non-aqueous solvent and a lithium salt, an organic solid electrolyte, an inorganic solid electrolyte, and the like. The non-aqueous solvent may be for example, an aprotic organic solvent such as N-methyl-2-pyrrolidinone, propylene carbonate, ethylene carbonate, butylene carbonate, dimethyl carbonate, diethyl carbonate, gamma-butyro lactone, 1,2-dimethoxyethane, 2-methyl tetrahydrofuran, dimethylsulfoxide, 1,3-dioxolane, formamide, N,N-dimethyl formamide, dioxolane, acetonitrile, nitromethane, methyl formate, methyl acetate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, ethyl propionate, and the like. The lithium salt is a material that is dissolved in the non-aqueous solvent and non-limiting examples thereof may be LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lower aliphatic lithium carboxylate, tetraphenyl lithium borate, imide, and the like.

Non-limiting examples of the organic solid electrolyte may be a polyethylene derivative, a polyethylene oxide derivative, a polypropylene oxide derivative, a phosphoric acid ester polymer, polyester sulfide, polyvinyl alcohol, polyvinylidene fluoride, and the like.

Non-limiting examples of the inorganic solid electrolyte may be $Li_3N$, LiI, $Li_5NI_2$, $Li_3N$-LiI-LiOH, $Li_2SiS_3$, $Li_4SiO_4$, $Li_4SiO_4$-LiI-LiOH, $Li_3PO_4$-$Li_2S$-$SiS_2$, and the like.

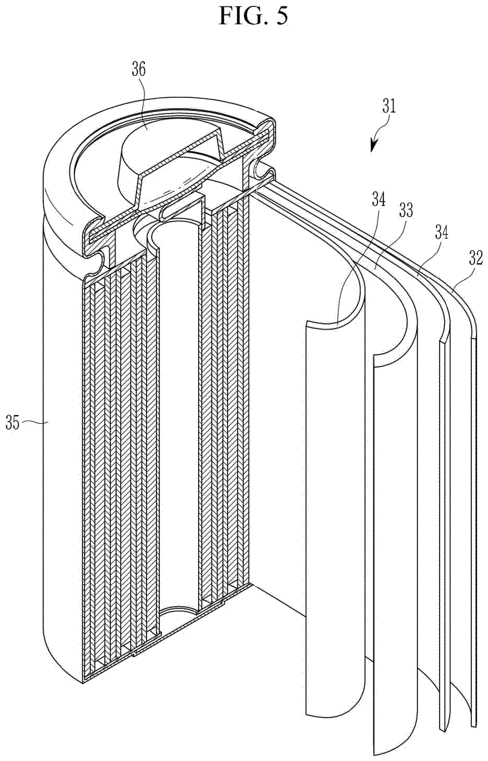

FIG. 5 is a perspective view that schematically shows a representative structure of a rechargeable lithium battery.

Referring to FIG. 5, a rechargeable lithium battery 31 includes a positive electrode 33 including the positive active material according to an embodiment, a negative electrode 32, and a separator 34. The above-described positive electrode 33, the negative electrode 32, and the separator 34 are wound or folded and housed in a battery case 35. Then, an organic electrolyte solution is injected and sealed in the battery case 35 with a cap assembly 36 to complete a rechargeable lithium battery 31. The battery case 35 may be cylindrical, prismatic, thin film-type, and the like.

The rechargeable lithium battery may be a lithium ion battery.

A separator may be disposed between the positive electrode and the negative electrode and wound or laminated to form an electrode assembly. The electrode assembly is housed in the case, impregnated into the organic electrolyte solution, and the resultant is sealed to complete a rechargeable lithium battery.

Also, the rechargeable lithium battery forms a battery pack with a circuit, and a single or multiple pack may be used for all devices requiring high capacity and high power as needed. For example, it may be used for a laptop, a smart phone, electric vehicle and so on. In addition, the rechargeable lithium battery has excellent storage stability, cycle-life characteristics at high temperatures, and high-rate characteristics, and thus may be used in an electric vehicle (EV). For example, it may be used for a hybrid vehicle such as a plug-in hybrid electric vehicle (PHEV).

The present invention is explained in more detail in the following examples and comparative examples. It is to be understood, however, that the examples are for the purpose of illustration and are not to be construed as limiting the present invention.

**Examples**

**Example 1**

**Example 1-1: Synthesis of Metal Hydroxide Precursor ($Ni_{0.6}Co_{0.2}Mn_{0.2}(OH)_2$)**

In the following preparing process, a 2M aqueous solution including nickel sulfate, cobalt sulfate, and manganese sulfate was used as metal raw materials for forming metal hydroxide precursors.

[First Step: 1.5 kW/m', $NH_3 \cdot H_2O$ 0.30 M, pH 10 to 11, and reaction time of 6 hours]

First, ammonia water ($NH_3 \cdot H_2O$) having a concentration of 0.30 M was put in a reactor. While a metal raw materials and a complex agent (ammonia water) were added thereto respectively at 90 ml/min and 10 ml/min at 50 °C under an agitation power of 1.5 kW/m', a reaction was started. While NaOH was added thereto to maintain pH, the reaction was performed for 6 hours. Core particles obtained as a reaction result had an average size of about 5.5 $\mu$m to 6.5 $\mu$m and then, moved toward a second step.

[Second Step: 1.0 kW/m', $NH_3 \cdot H_2O$ 0.35 M, pH 10 to 11, and reaction time of 6 hours]

The metal raw materials and the complex agent were added thereto respectively at 100 ml/min and 15 ml/min, while the reaction temperature was maintained at 50 °C, so that the complex agent maintained a concentration of 0.35 M. While NaOH was added thereto in order to maintain pH, the reaction was performed for 6 hours. Herein, the reaction was performed by lowering the agitation power to 1.0 kW/m$^3$ (*i.e.* lower than that of the first step). Particles having a core and an intermediate layer produced from this reaction had an average size of 9 $\mu$m to 10 $\mu$m, and then, a third step was performed as follows.

[Third Step: 1.0 kW/m', $NH_3 \cdot H_2O$ 0.40 M, pH 10 to 11, and reaction time of 4 hours]

The metal raw materials and the complex agent were added thereto respectively at 150 ml/min and 20 ml/min, while the reaction temperature was maintained at 50 °C, so that the complex agent maintained a concentration of 0.40 M. While NaOH was added thereto in order to maintain pH, the reaction was performed for 4 hours. Herein, the agitation power was maintained equally to that of the second step.

[Post Process]

As for a post process, the resulting material was washed and hot air-dried at about 150 °C for 24 hours to obtain a metal hydroxide precursor ($Ni_{0.6}Co_{0.2}Mn_{0.2}(OH)_2$).

## Example 1-2: Preparation of Positive Active Material

A first fired product including a lithium nickel-based composite oxide, $LiNi_{0.6}Co_{0.2}Mn_{0.2}O_2$, was obtained by mixing LiOH as a lithium source and the metal hydroxide precursor of $Ni_{0.6}Co_{0.2}Mn_{0.2}(OH)_2$ according to Example 1-1 in the same mole ratio and then, performing a first heat treatment. The first heat-treatment was performed by increasing a temperature at 2.0 °C/min from 25 °C to 850 °C, maintaining the temperature at 850 °C for 6 hours, and decreasing the temperature from 850 °C to 25 °C at 2.0 °C/min.

100 parts by weight of the first fired product and 1 part by weight of $Mn_2O_3$ were mixed to obtain a second mixture, and the second mixture was second heat-treated to obtain a positive active material. The second heat-treatment was performed by increasing a temperature at 2.0 °C/min from 25 °C to 400 °C, maintaining the temperature at 400 °C for 6 hours, and decreasing the temperature from 400 °C to 25 °C at 2.0 °C/min.

## Example 1-3: Manufacture of Coin Cell

The prepared positive active material, a carbon black carbon conductive agent (Denka Black, Denka Korea Co., Ltd.), and polyvinylidene fluoride (PVdF) were mixed in a weight ratio of 92:4:4 and then, mixed with N-methylpyrrolidone (NMP) to prepare slurry. The slurry was bar-coated on a 15 $\mu$m-thick aluminium current collector, dried at room temperature and at 120 °C under vacuum again, and then, compressed and punched to manufacture a 45 $\mu$m-thick positive electrode plate.

The positive electrode plate was used along with a lithium metal as a counter electrode, a PTFE separator, and a solution prepared by dissolving 1.3 M $LiPF_6$ in a mixed solvent of EC (ethylene carbonate), DEC (diethyl carbonate), and EMC (ethylmethyl carbonate) (in a volume ratio of 3:4:3) as an electrolyte to manufacture a coin cell.

## Comparative Example 1

A coin cell was manufactured according to the same method as Example 1 except that $Mn_2O_3$ was not added to prepare the positive active material.

## Comparative Example 2-1: Synthesis of Metal Hydroxide Precursor ($Ni_{0.6}Co_{0.2}Mn_{0.2}(OH)_2$)

The metal hydroxide precursor ($Ni_{0.6}Co_{0.2}Mn_{0.2}(OH)_2$) was synthesized through the co-precipitation method described below. In the following preparing process, nickel sulfate, cobalt sulfate, and manganese sulfate were used as metal raw materials for forming metal hydroxide precursors.

[1 Step: 250 rpm, $NH_3 \cdot H_2O$ 0.50 M, pH 11.4-11.6]

First, ammonia water with a concentration of 0.50 mol/L was added to the reactor. A reaction was started at an agitation power of 250 kW/m$^3$ and a reaction temperature of 50 °C, and then, the metal raw materials were put at 6.0 ml/min, while the ammonia water was put at 1.35 ml/min. Subsequently, NaOH was added thereto in order to maintain pH. Herein, pH of a reactor was in a range of 11.4 to 11.6. Within this pH range, a reaction was performed for 33 hours. A post process was performed by washing the reaction resulting material and drying it with hot air at about 150 °C for 24 hours to obtain a metal hydroxide precursor ($Ni_{0.6}Co_{0.2}Mn_{0.2}(OH)_2$).

**Comparative Example 2-2: Preparation of Positive Active Material**

A positive active material was prepared according to the same method as Example 1-2 except that the metal hydroxide precursor according to Comparative Example 2-1 was used, and $Mn_2O_3$ was not added thereto.

**Comparative Example 2-3: Manufacture of Coin Cell**

A coin cell was manufactured according to the same method as Example 1-3 except that the positive active material according to Comparative Example 2-2 was used.

**Comparative Example 3**

A coin cell was manufactured according to the same method as Example 1 except that a positive active material was prepared by using the metal hydroxide precursor ($Ni_{0.6}Co_{0.2}Mn_{0.2}(OH)_2$) prepared according to the same method as Comparative Example 2-1.

**Comparative Example 4**

A coin cell was manufactured according to the same method as Example 1 except that a positive active material was prepared by using $Co_3O_4$ oxide instead of $Mn_2O_3$.

**Comparative Example 5**

A coin cell was manufactured according to the same method as Example 1 except that a positive active material was prepared by using manganese acetate 4 hydrate instead of $Mn_2O_3$.

<u>**Evaluation Example 1:**</u> Evaluation of Residual Lithium Content

Unreacted residual lithium contents present on the surfaces of the positive active materials according to Example 1 and Comparative Examples 1 to 5 were measured using a HCl titration method, and the results are shown in Table 1. In addition, residual lithium reduction rates (%) according to Example 1 and Comparative Example 3 were respectively calculated according to Equations 1 and 2, and the results are shown in Table 2.

The unreacted residual lithium contents were measured in the following method. 10 g of a positive active material was put in distilled water and then, stirred at 300 rpm for 30 minutes, and then, a solution part was taken therefrom, and a pH change thereof was measured, while HCl was put therein. Since the unreacted residual lithium was present as $Li_2CO_3$ and LiOH, H$^+$ was reacted with OH$^-$ and $CO_3^{2-}$ ions, when the HCl was added thereto, and reached a titration, and accordingly, the unreacted residual lithium contents were obtained by measuring an amount of the put HCl solution.

[Table 1]

|  | Residual lithium content (Li content in $Li_2CO_3$ & LiOH/ppm) |
|---|---|
| Example 1 | 954 |
| Comparative Example 1 | 1478 |
| Comparative Example 2 | 904 |
| Comparative Example 3 | 853 |
| Comparative Example 4 | 1330 |
| Comparative Example 5 | 1235 |

[Table 2]

|  | Residual lithium content (Li content in $Li_2CO_3$ & LiOH / ppm) | Decrease rate of residual lithium (%) |
|---|---|---|
| Example 1 | 954 | 35.5 % |
| Comparative Example 3 | 853 | 5.6 % |

Decrease rate of residual lithium of Example 1 (%) = (residual lithium content of Comparative Example 1 - residual lithium content of Example 1)/(residual lithium content of Comparative Example 1) X 100    [Equation 1]

Decrease rate of residual lithium of Comparative Example 3 (%) = (residual lithium content of Comparative Example 2 - residual lithium content of Comparative Example 3)/(residual lithium content of Comparative Example 2) X 100    [Equation 2]

Comparative Example 1 exhibited a high unreacted residual lithium generation rate during manufacture of the lithium nickel-based composite oxide having a surface orientation, but Example 1 exhibited a lower unreacted residual lithium content than that of Comparative Example 1 by reacting the unreacted residual lithium with $Mn_2O_3$ and thus removing the residual lithium.

Comparative Example 2 provided a lithium nickel-based composite oxide having no surface orientation and thus exhibited a small generation amount of the unreacted residual lithium itself.

Comparative Example 3 reacted the unreacted residual lithium of Comparative Example 2 with $Mn_2O_3$, but an unreacted residual lithium reduction rate (5.6 %) of Comparative Example 3 relative to Comparative Example 2 was lower than an unreacted residual lithium reduction rate (35.5 %) of Example 1 relative to Comparative Example 1, and the reason is that since a small amount of unreacted residual lithium was present on the surface of the lithium nickel-based composite oxide, when Comparative Example 2 was used as a parent material, the lithium manganese composite oxide was not effectively formed.

Even though unreacted residual lithium was respectively reacted with a lithium cobalt oxide precursor and a manganese salt (manganese acetate 4 hydrate), Comparative Example 4 ($Co_3O_4$) and Comparative Example 5 (manganese acetate 4 hydrate) showed a high unreacted residual lithium content due to low reactivity with lithium compared with Example 1 using $Mn_2O_3$.

**Evaluation Example 2:** Transmission Electron Microscopy (TEM) and Energy Dispersive X-ray Spectroscopy (EDS), and Scanning Electron Microscopy (SEM) Analysis

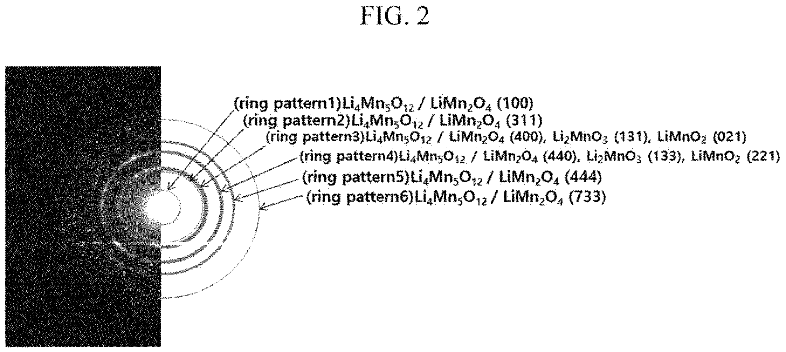

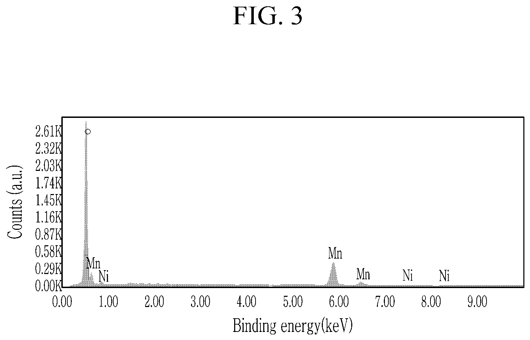

A TEM image of the selected area diffraction (SAD) pattern of lithium manganese composite oxide in the positive active material of Example 1 (e.g., Example 1-2: Preparation of Positive Active Material) is shown in FIG. 2, and EDS element analysis results are shown in Table 3 and FIG. 3.

Referring to the TEM image of FIG. 2 and the EDS element analysis results of Table 3 and FIG. 3, a crystal structure of a lithium manganese composite oxide corresponding with an interplane distance from a ring pattern (a distance from a center to a ring) shown in the TEM image may be identified. In FIG. 2, since ring patterns 1, 2, 5, and 6 only including cubic phases ($Li_4Mn_5O_{12}$, $LiMn_2O_4$) were found, the lithium manganese composite oxide necessarily had a cubic crystal structure.

In FIG. 3 and Table 3, a Mn:O atomic mol ratio (mol%) was observed as 25:72, and accordingly, a $Li_2MnO_3$ compound having a similar mole ratio of 25:75 to 25:72 of the Mn:O atomic mole ratio may be inferred among compounds shown in the ring patterns 3 and 4 of FIG. 2, and accordingly, the lithium manganese composite oxide may necessarily have a monoclinic crystal structure corresponding to that of the compound ($Li_2MnO_3$).

In addition, the lithium manganese composite oxide may optionally have an orthorhombic ($LiMnO_2$) crystal structure included in the ring patterns 3 and 4 in FIG. 2.

[Table 3]

| Elements | Wt % | Atomic mol% |
|---|---|---|
| O | 42.96 | 72.25 |
| Ni | 5.77 | 2.65 |

(continued)

| Elements | Wt % | Atomic mol% |
|---|---|---|
| Mn | 51.26 | 25.11 |

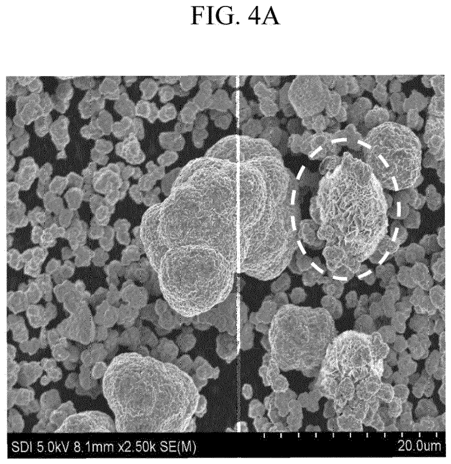

FIG. 4A is a scanning electron microscopy (SEM) image of the material according to Example 1. As shown in this image, for example, in the circled secondary particle, the particle has a flower-shaped surface due the presence of lithium manganese composite oxide at the surface of the particle.

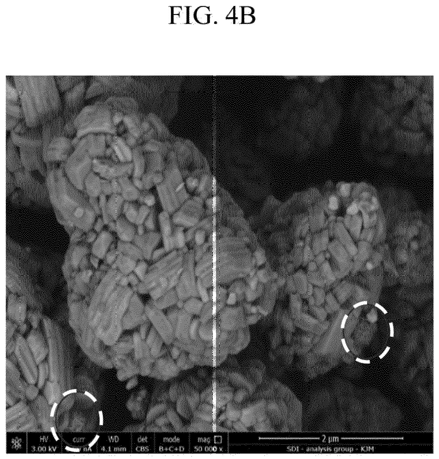

FIG. 4B is a SEM image of a material prepared in substantially the same manner as Example 1, except for using lithium manganese composite oxide having a comparatively smaller size. Here, the dashed circles indicate particles of the deposited lithium manganese composite oxide. Several regions of the particles have a flower-shaped surface due the presence of lithium manganese composite oxide at the surface of the particles, while several regions of the particles have primary particles that are stacked and aligned without channels therebetween.

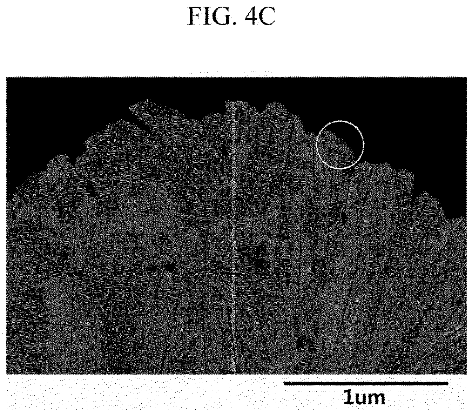

FIG. 4C is a cross-sectional SEM image of the material according to Example 1, showing the radial arrangement of lithium nickel-based composite oxide primary particles at the surface of the particle. The crossed lines indicate perpendicular axes of the plate-shaped primary particles. The circled region corresponds to a particle of lithium manganese composite oxide.

**Evaluation Example 3:** Charge and Discharge Characteristics

The coin cells according to Example 1 and Comparative Examples 1 to 3 were charged under a constant current at a current of a 0.1C up to 4.3 V (vs. Li) at 25 °C and subsequently, cut off at a current of a 0.05 C, while the 4.3 V was maintained in the constant voltage mode. Subsequently, the cells were discharged to a voltage of 3.0 V (vs. Li) at a constant current of 0.1 C (1st cycle). After the 1st cycle, the rechargeable lithium battery cells were charged under a constant current at a current of a 0.1 C up to a voltage of 4.3 V (vs. Li) at 25 °C and subsequently, cut off at a current of a 0.05 C, while the 4.3 V was maintained in the constant voltage mode. Subsequently, the cells were discharged to a voltage of 3.0 V (vs. Li) at a constant current of a 0.1 C (2nd cycle). After the 2nd cycle, the cells were charged under a constant current at a current of 0.2 C up to a voltage of 4.3 V (vs. Li) at 25 °C and subsequently, cut off at a current of a 0.05 C, while the 4.3 V was maintained in the constant voltage mode. Subsequently, the cells were discharged to 3.0 V (vs. Li) respectively at a constant current of a 0.2 C, a 0.33 C, a 0.5 C, a 1.0 C, and a 2.0 C (the 3rd to 7th cycles). In all the charge and discharge cycles, a pause for 10 minutes after each charge/discharge cycle was set. The charge and discharge experiment results are shown in Table 4.

[Table 4]

| | 1st cycle charge and discharge efficiency | | | Discharge capacity at each rate (mAh/g) | | | | |
|---|---|---|---|---|---|---|---|---|
| | Charge capacity (mAh/g) | Discharge capacity (mAh/g) | Efficiency (%) | 0.2 C | 0.33 C | 0.5 C | 1 C | 2 C |
| Example 1 | 196.5 | 188.1 | 95.7 % | 185.2 | 182.3 | 179.9 | 174.3 | 167.4 |
| Comparative Example 1 | 197.1 | 185.9 | 94.3 % | 183.1 | 180.3 | 178.2 | 172.7 | 166.1 |
| Comparative Example 2 | 196.9 | 176.2 | 89.5 % | 173.0 | 170.1 | 167.4 | 162.3 | 156.3 |
| Comparative Example 3 | 196.7 | 176.1 | 89.5 % | 172.9 | 170.0 | 167.3 | 162.3 | 156.3 |

As shown in Table 4, the coin cell according to Example 1 exhibited improved discharge capacity at each rate and charge and discharge efficiency characteristics compared with the coin cells including no lithium nickel oxide having a surface orientation according to Comparative Examples 2 and 3. Particularly, since a manganese composite oxide was not effectively formed, Comparative Example 3 had similar characteristics to those of Comparative Example 2. In addition, compared with Comparative Example 1 having a surface orientation but including no manganese composite oxide, the coin cell of Example 1 exhibited improved discharge capacity, efficiency, and high rate characteristics due to formation of a lithium manganese composite oxide by effectively removing unreacted lithium and accordingly,.

**Evaluation Example 4:** Evaluation of High Temperature Cycle-life Characteristics

The coin cells according to Comparative Example 1 and Example 1 after the 1st cycle in Evaluation Example 3 were charged under a constant current at a current of a 1.0 C up to a voltage of 4.30 V(vs. Li) at 45 °C and subsequently, cut off at a current of a 0.05 C, while the 4.30 V was maintained in the constant voltage mode. Subsequently, the cells were discharged at a constant current of a 1.0 C down to a voltage of 3.0 V (vs. Li), and then, this charge/discharge cycle was 50 times repeated. In all the charge and discharge cycles, a pause of 10 minutes after each charge/discharge cycle was set. The charge and discharge experiment result and a capacity retention at the 50th cycle were shown in Table 5.

A capacity retention at the 50th cycle and initial charge and discharge efficiency were defined according to Equation 3.

Capacity retention at 50th cycle [%] = [Discharge capacity at 50th cycle / Discharge capacity at 1st cycle] X 100 $\qquad$ [Equation 3]

[Table 5]

|  | Discharge capacity at 1st cycle (mAh/g) | Discharge capacity at 50th cycle (mAh/g) | Capacity retention at 50th cycle (%) |
|---|---|---|---|
| Example 1 | 186.8 | 183.0 | 98.0 |
| Comparative Example 1 | 184.2 | 178.6 | 97.0 |
| Comparative Example 2 | 175.1 | 163.2 | 93.2 |

The coin cell of Example 1 having the agglomerated plate-shaped primary particles and lithium manganese composite oxide according to embodiments of the present disclosure exhibited much excellent cycle-life characteristics by effectively removing unreacted residual lithium on the surface. In contrast, the coin cell of Comparative Example 1, which did not include the lithium manganese composite oxide, and the coin cell of Comparative Example 2, which did not include the agglomerate plate-shaped primary particles or lithium manganese composite oxide, showed significantly (comparatively) lower charge and discharge capacities and capacity retention rates.

**Evaluation Example 5:** Evaluation of High Temperature Gas Generation Amount

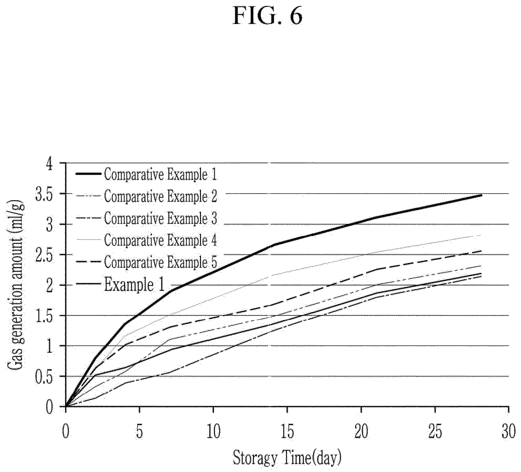

The coin cells according to Example 1 and Comparative Example 1 to 5 were charged under a constant current at a current of a 0.1C up to a voltage of 4.3 V (vs. Li) and subsequently, cut off at a current of a 0.05 C, while the 4.3 V was maintained in the constant voltage mode at room temperature of 25 °C at the 1st cycle. Subsequently, the cells were constant current discharged at a current of a 0.1 C down to a voltage of 3.0 V (vs. Li). In the 2nd cycle, the lithium battery cells were charged under a constant current up to a voltage of 4.3 V (vs. Li) at a current of a 0.1 C at 25 °C and subsequently, cut off at a current of a 0.05 C, while the 4.3 V was maintained in the constant voltage mode and then, dissembled, and while electrode plates taken therefrom were respectively inserted with an electrolyte solution into a pouch and stored in an 80°C oven, a volume change of the pouch was converted into a mass change in an Archimedes method, and the results are shown in FIG. 6. Meanwhile, the electrolyte was prepared by dissolving 1.3 M $LiPF_6$ in a mixed solvent of EC (ethylene carbonate), DEC (diethyl carbonate), and EMC (ethylmethyl carbonate) (in a volume ratio of 3:4:3).

Example 1 and Comparative Examples 2 and 3 exhibited an improvement in terms of a gas generation amount compared with Comparative Examples 1, 4, and 5, and Example 1 exhibited a very high gas generation reduction rate compared with Comparative Example 3. Resultantly, Example 1 showed that a gas generation amount and a gas generation reduction rate were simultaneously improved compared with Comparative Examples 1 to 5.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

**Claims**

1. A positive active material for a rechargeable lithium battery, comprising

    a lithium nickel-based composite oxide including a secondary particle in which a plurality of plate-shaped primary particles are agglomerated; and

a lithium manganese composite oxide having at least two crystal structures,

wherein the secondary particle has a regular array structure where (003) planes of the primary particles are oriented in a vertical direction with respect to the surface of the secondary particle, and

wherein the lithium manganese composite oxide is represented by Chemical Formula 1:

[Chemical Formula 1] $xLiMnO_2 \cdot yLi_4Mn_5O_{12} \cdot zLiMn_2O_4 \cdot (1-x-y-z)Li_2MnO_3$,

wherein $0 \leq x < 1$, $0 \leq y < 1$, $0 \leq z < 1$, $0 < y+z < 1$ and $0 < x+y+z < 1$, and

wherein the lithium nickel-based composite oxide is represented by Chemical Formula 2:

[Chemical Formula 2] $Li_a(Ni_{1-x-y-z}Co_xMn_yM_z)O_2$,

wherein $0.95 \leq a \leq 1.3$, $x \leq (1-x-y-z)$, $y \leq (1-x-y-z)$, $0 < x < 1$, $0 \leq y < 1$, and $0 \leq z < 1$, and M is at least one element selected from boron, magnesium, calcium, strontium, barium, titanium, vanadium, chromium, iron, copper, zirconium, and aluminium.

2. A positive active material according to claim 1, wherein the lithium manganese composite oxide is present on the surface of the lithium nickel-based composite oxide.

3. A positive active material according to claim 1 or claim 2, wherein the lithium manganese composite oxide is included in an amount of 0.1 wt% to 5 wt% based on a total weight of the positive active material.

4. A positive active material according to any one of claims 1 to 3, wherein the lithium manganese composite oxide has an average particle diameter of less than or equal to 10 $\mu$m.

5. A positive active material according to any one of claims 1 to 4, wherein the lithium manganese composite oxide comprises a cubic crystal structure and a monoclinic crystal structure and optionally an orthorhombic crystal structure.

6. A positive active material according to claim 5, wherein

the lithium manganese composite oxide having the cubic crystal structure is at least one of $LiMn_2O_4$ and $Li_4Mn_5O_{12}$,

the lithium manganese composite oxide having the monoclinic crystal structure is $Li_2MnO_3$, and

the lithium manganese composite oxide having the orthorhombic crystal structure is $LiMnO_2$.

7. A positive active material according to any one of claims 1 to 6, wherein the lithium nickel-based composite oxide has a porosity of 1 % to 8 %.

8. A positive active material according to any one of claims 1 to 7, wherein the lithium nickel-based composite oxide has a specific surface area of 0.3 m$^2$/g to 0.8 m$^2$/g.

9. A positive active material according to any one of claims 1 to 8, wherein the secondary particles has a one-centered radial arrangement having one center or a multi-centered radial array structure having a plurality of centers.

10. A positive active material according to any one of claims 1 to 9, wherein an unreacted residual lithium content present on the surface of the positive active material is less than or equal to 1,300 ppm.

11. A positive active material according to any one of claims 1 to 10, wherein an unreacted residual lithium content present on the surface of the positive active material is less than or equal to 1,000 ppm.

12. A method of preparing the positive active material for a rechargeable lithium battery, comprising

mixing a metal hydroxide precursor and a lithium source to prepare a first mixture;

first heat-treating the first mixture under a high temperature condition to prepare a first fired product including residual lithium;

mixing the first fired product with manganese-based oxide to prepare a second mixture; and

second heat-treating the second mixture to prepare the positive active material according to any one of claims 1 to 11.

13. A method according to claim 12, wherein:

the first heat-treating is performed at 750 °C to 950 °C; and/or
the manganese-based oxide is mixed in an amount of 0.1 to 5 parts by weight based on 100 parts by weight of the first fired product; and/or
the second mixture further comprises a lithium source.

14. A rechargeable lithium battery comprising

a positive electrode comprising the positive active material according to any one of claims 1 to 11;
a negative electrode comprising a negative active material; and
an electrolyte.

**Patentansprüche**

1. Positives Aktivmaterial für eine wiederaufladbare Lithiumbatterie, das Folgendes umfasst

ein Lithium-Nickel-basiertes Mischoxid, das ein Sekundärpartikel einschließt, in dem eine Vielzahl von plattenförmigen Primärpartikeln agglomeriert ist; und
ein Lithium-Mangan-Mischoxid, das mindestens zwei Kristallstrukturen aufweist,
wobei das Sekundärpartikel eine regelmäßige Anordnungsstruktur aufweist, bei der (003) Ebenen der Primärpartikel in einer vertikalen Richtung in Bezug auf die Oberfläche des Sekundärpartikels ausgerichtet sind, und
wobei das Lithium-Mangan-Mischoxid durch die chemische Formel 1 dargestellt wird:

[Chemische Formel 1]   $xLiMnO_2 \cdot yLi_4Mn_5O_{12} \cdot zLiMn_2O_4 \cdot (1-x-y-z)Li_2MnO_3,$

wobei $0 \leq x < 1$, $0 \leq y < 1$, $0 \leq z < 1$, $0 < y+z < 1$ und $0 < x+y+z < 1$ und
wobei das Lithium-Nickel-basierte Mischoxid durch die chemische Formel 2 dargestellt wird:

[Chemische Formel 2]   $Li_a(Ni_{1-x-y-z}Co_xMn_yM_z)O_2,$

wobei $0,95 \leq a \leq 1,3$, $x \leq (1-x-y-z)$, $y \leq (1-x-y-z)$, $0 < x < 1$, $0 \leq y < 1$ und $0 \leq z < 1$ und M mindestens ein Element ist, ausgewählt aus Bor, Magnesium, Calcium, Strontium, Barium, Titan, Vanadium, Chrom, Eisen, Kupfer, Zirkonium und Aluminium.

2. Positives Aktivmaterial nach Anspruch 1, wobei das Lithium-Mangan-Mischoxid auf der Oberfläche des Lithium-Nickel-basierten Mischoxids vorhanden ist.

3. Positives Aktivmaterial nach Anspruch 1 oder Anspruch 2, wobei das Lithium-Mangan-Mischoxid in einer Menge von 0,1 Gew.-% bis 5 Gew.-%, auf Grundlage eines Gesamtgewichts des positiven Aktivmaterials, eingeschlossen ist.

4. Positives Aktivmaterial nach einem der Ansprüche 1 bis 3, wobei das Lithium-Mangan-Mischoxid einen mittleren Partikeldurchmesser von weniger als oder gleich 10 $\mu$m aufweist.

5. Positives Aktivmaterial nach einem der Ansprüche 1 bis 4, wobei das Lithium-Mangan-Mischoxid eine kubische Kristallstruktur und eine monokline Kristallstruktur und wahlweise eine orthorhombische Kristallstruktur umfasst.

6. Positives Aktivmaterial nach Anspruch 5, wobei

das Lithium-Mangan-Mischoxid, das eine kubische Kristallstruktur aufweist, mindestens eines von $LiMn_2O_4$ und $Li_4Mn_5O_{12}$ ist,
das Lithium-Mangan-Mischoxid, das eine monokline Kristallstruktur aufweist, $Li_2MnO_3$ ist und
das Lithium-Mangan-Mischoxid, das eine orthorhombische Kristallstruktur aufweist, $LiMnO_2$ ist.

7. Positives Aktivmaterial nach einem der Ansprüche 1 bis 6, wobei das Lithium-Nickel-basierte Mischoxid eine Porosität von 1 % bis 8 % aufweist.

8. Positives Aktivmaterial nach einem der Ansprüche 1 bis 7, wobei das Lithium-Nickel-basierte Mischoxid eine spezifische Oberfläche von 0,3 $m^2$/g bis 0,8 $m^2$/g aufweist.

9. Positives Aktivmaterial nach einem der Ansprüche 1 bis 8, wobei die Sekundärpartikel eine einzentrische radiale Anordnung aufweisen, die ein Zentrum oder eine mehrzentrische radiale Anordnungsstruktur, die eine Vielzahl von Zentren aufweist, aufweisen.

10. Positives Aktivmaterial nach einem der Ansprüche 1 bis 9, wobei ein Gehalt an nicht umgesetztem Restlithium, das auf der Oberfläche des positiven Aktivmaterials vorhanden ist, geringer als oder gleich 1.300 ppm ist.

11. Positives Aktivmaterial nach einem der Ansprüche 1 bis 10, wobei ein Gehalt an nicht umgesetztem Restlithium, das auf der Oberfläche des positiven Aktivmaterials vorhanden ist, geringer als oder gleich 1.000 ppm ist.

12. Verfahren zum Herstellen eines positiven Aktivmaterials für eine wiederaufladbare Lithiumbatterie, umfassend

Mischen eines Metallhydroxid-Vorläufers und einer Lithiumquelle zum Herstellen einer ersten Mischung;
erste Wärmebehandlung der ersten Mischung unter einer Hochtemperaturbedingung zum Herstellen eines ersten gebrannten Produkts, das Restlithium einschließt;
Mischen des ersten gebrannten Produkts mit Mangan-basiertem Oxid zum Herstellen einer zweiten Mischung und
zweite Wärmebehandlung der zweiten Mischung zum Herstellen des positiven Aktivmaterials nach einem der Ansprüche 1 bis 11.

13. Verfahren nach Anspruch 12, wobei:

de erste Wärmebehandlung bei 750 °C bis 950 °C durchgeführt wird und/oder
das Mangan-basierte Oxid in einer Menge von 0,1 bis 5 Gewichtsteilen, auf Grundlage von 100 Gewichtsteilen des ersten gebrannten Produkts, beigemischt und/oder
die zweite Mischung weiter eine Lithiumquelle umfasst.

14. Wiederaufladbare Lithiumbatterie, umfassend:

eine positive Elektrode, umfassend das positive Aktivmaterial nach einem der Ansprüche 1 bis 11;
eine negative Elektrode, die ein negatives Aktivmaterial umfasst; und
einen Elektrolyten.

**Revendications**

1. Matériau actif positif pour une batterie au lithium rechargeable, comprenant

un oxyde composite à base de lithium et de nickel incluant une particule secondaire dans laquelle une pluralité de particules primaires en forme de plaque sont agglomérées ; et
un oxyde composite de lithium et de manganèse présentant au moins deux structures cristallines,
dans lequel la particule secondaire présente une structure de réseau régulière où les plans (003) des particules primaires sont orientés dans une direction verticale par rapport à la surface de la particule secondaire, et
dans lequel l'oxyde composite de lithium et de manganèse est représenté par la Formule chimique 1 :

[Formule chimique 1]     $xLiMnO_2 \cdot yLi_4Mn_5O_{12} \cdot zLiMn_2O_4 \cdot (1-x-y-z)Li_2MnO_3$,

dans laquelle $0 \leq x < 1$, $0 \leq y < 1$, $0 \leq z < 1$, $0 < y+z < 1$ et $0 < x+y+z < 1$, et
dans laquelle l'oxyde composite à base de lithium et de nickel est représenté par la Formule chimique 2 :

[Formule chimique 2]     $Li_a(Ni_{1-x-y-z}Co_xMn_yM_z)O_2$,

dans laquelle $0,95 \leq a \leq 1,3$, $x \leq (1-x-y-z)$, $y \leq (1-x-y-z)$, $0 < x < 1$, $0 \leq y < 1$ et $0 \leq z < 1$, et M est au moins un élément choisi parmi le bore, le magnésium, le calcium, le strontium, le baryum, le titane, le vanadium, le chrome, le fer, le cuivre, le zirconium et l'aluminium.

2. Matériau actif positif selon la revendication 1, dans lequel l'oxyde composite de lithium et de manganèse est présent à la surface de l'oxyde composite à base de lithium et de nickel.

3. Matériau actif positif selon la revendication 1 ou la revendication 2, dans lequel l'oxyde composite de lithium et de manganèse est inclus en une quantité allant de 0,1 % en poids à 5 % en poids par rapport au poids total du matériau actif positif.

4. Matériau actif positif selon l'une quelconque des revendications 1 à 3, dans lequel l'oxyde composite de lithium et de manganèse présente un diamètre de particule moyen inférieur ou égal à 10 $\mu$m.

5. Matériau actif positif selon l'une quelconque des revendications 1 à 4, dans lequel l'oxyde composite de lithium et de manganèse comprend une structure cristalline cubique et une structure cristalline monoclinique et, facultativement, une structure cristalline orthorhombique.

6. Matériau actif positif selon la revendication 5, dans lequel

l'oxyde composite de lithium et de manganèse présentant la structure cristalline cubique est au moins l'un parmi $LiMn_2O_4$ et $Li_4Mn_5O_{12}$,
l'oxyde composite de lithium et de manganèse présentant la structure cristalline monoclinique est $Li_2MnO_3$, et
l'oxyde composite de lithium et de manganèse présentant la structure cristalline orthorhombique est $LiMnO_2$.

7. Matériau actif positif selon l'une quelconque des revendications 1 à 6, dans lequel l'oxyde composite à base de lithium et de nickel présente une porosité allant de 1 % à 8 %.

8. Matériau actif positif selon l'une quelconque des revendications 1 à 7, dans lequel l'oxyde composite à base de lithium et de nickel présente une surface spécifique allant de 0,3 $m^2$/g à 0,8 $m^2$/g.

9. Matériau actif positif selon l'une quelconque des revendications 1 à 8, dans lequel les particules secondaires présentent un agencement radial monocentrique présentant un centre ou une structure de réseau radial multicentrique présentant une pluralité de centres.

10. Matériau actif positif selon l'une quelconque des revendications 1 à 9, dans lequel une teneur en lithium résiduel n'ayant pas réagi présente à la surface du matériau actif positif est inférieure ou égale à 1300 ppm.

11. Matériau actif positif selon l'une quelconque des revendications 1 à 10, dans lequel une teneur en lithium résiduel n'ayant pas réagi présente à la surface du matériau actif positif est inférieure ou égale à 1000 ppm.

12. Procédé de préparation du matériau actif positif pour une batterie au lithium rechargeable, comprenant

le mélange d'un précurseur d'hydroxyde métallique et d'une source de lithium pour préparer un premier mélange ;
le premier traitement thermique du premier mélange dans des conditions de température élevée pour préparer un premier produit cuit incluant du lithium résiduel ;
le mélange du premier produit cuit avec de l'oxyde à base de manganèse pour préparer un second mélange ; et
le second traitement thermique du second mélange pour préparer le matériau actif positif selon l'une quelconque des revendications 1 à 11.

13. Procédé selon la revendication 12, dans lequel :

le premier traitement thermique est réalisé à une température allant de 750 °C à 950 °C ; et/ou
l'oxyde à base de manganèse est mélangé en une quantité de 0,1 à 5 parties en poids sur la base de 100 parties en poids du premier produit cuit ; et/ou
le second mélange comprend en outre une source de lithium.

14. Batterie au lithium rechargeable comprenant

une électrode positive comprenant le matériau actif positif selon l'une quelconque des revendications 1 à 11 ;
une électrode négative comprenant un matériau actif négatif ; et
un électrolyte.

FIG. 1A

FIG. 1B

Primary Particle of
Lithium Nickel-based
Composite Oxide

Plane

t

10

R

28

20

24

26

22

Secondary Particle of
Lithium Nickel-based Composite Oxide

FIG. 2

(ring pattern1)$Li_4Mn_5O_{12}$ / $LiMn_2O_4$ (100)
(ring pattern2)$Li_4Mn_5O_{12}$ / $LiMn_2O_4$ (311)
(ring pattern3)$Li_4Mn_5O_{12}$ / $LiMn_2O_4$ (400), $Li_2MnO_3$ (131), $LiMnO_2$ (021)
(ring pattern4)$Li_4Mn_5O_{12}$ / $LiMn_2O_4$ (440), $Li_2MnO_3$ (133), $LiMnO_2$ (221)
(ring pattern5)$Li_4Mn_5O_{12}$ / $LiMn_2O_4$ (444)
(ring pattern6)$Li_4Mn_5O_{12}$ / $LiMn_2O_4$ (733)

FIG. 3

# FIG. 4A

SDI 5.0kV 8.1mm x2.50k SE(M)       20.0um

FIG. 4B

FIG. 4C

1um

# FIG. 5

FIG. 6

**EP 3 657 581 B1**

## REFERENCES CITED IN THE DESCRIPTION

**Patent documents cited in the description**

- EP 3272710 A1
- US 2017338488 A1
- US 2018212237 A1
- EP 2744021 A1
- US 2012282522 A1